# EUROPEAN PATENT SPECIFICATION

(11) **EP 0 629 428 B1**
(45) Date of publication and mention of the grant of the patent: **26.03.1997**
(21) Application number: 94850079.8
(22) Date of filing: 11.05.1994
(51) Int. Cl.: B01D 53/04

(54) **Filter element**
Filterelement
Elément filtrant

(30) Priority: 17.05.1993 SE 9301682
(43) Date of publication of application: 21.12.1994
(73) Proprietor: IF LUFTFILTER AB, S-502 60 Boras (SE)
(72) Inventor: Andersson, Jan, S-506 03 Dalsjöfors (SE)
(74) Representative: Kristiansen, Alf P.

(56) References cited:
- DE-A- 3 439 255
- FR-A- 2 215 996
- GB-A- 2 092 019
- US-A- 3 871 849
- US-A- 5 080 699

## Description

### TECHNICAL FIELD:

The present invention relates to a filter element for filtering of gases such as air. It is particularly suited for filtering of air in connection with the production of cellulose.

### PRIOR ART:

Air filters are commonly known. They may be made of different materials and for example consist of a filter for removing only particles. Exception for the solid or liquid particles, (these filters do not change the composition of the air) . These filters can often be sufficient, though for a higher degree of purification they are only used as a pre-filter.

For filtering of different gaseous components the air or gas is often allowed to pass through a pre-filter and thereafter a sorption filter which usually consists of granules and which has the ability to sorb non-desired gaseous components. One example of such sorption filters may consist of pellets of aluminium oxide, possibly impregnated with potassium permanganate. This type of sorption filter can be used for removing for example sulphur compounds, ethylene, ammonia and formaldehyde. Active carbon is also one example of such sorption filters.

During operation the sorption filter granules must be contained in some kind of container which permits gas percolation. These containers usually consist of plates and the containers are typically stacked on each other in a cabinet. Coupling of the air streams both in series and parallel will then be possible.

After the chemical filter or sorption filter, further filters may also be present for entrapping possible broken off particles from the chemical filter.

These type of filter or combinations thereof and other filters can be used both in industry and in other fields of activity. It is especially important that some industries obtain clean air or that the air is cleaned from impurities which derive from the production. An example thereof is the paper and pulp industry where corroding and foul- smelling sulphur compounds are responsible for a vast number of costly operation interruptions.

### TECHNICAL PROBLEM:

All filters must be cleaned or exchanged sooner or later. The problem with particle filters is the clogging and therefore the pressure fall through the filter is measured to obtain a measure of the clogging. Also chemical filters must be regenerated in some way and chemical samples are therefore taken to determine when exchange or regeneration should occur. The chemical filters usually consist, as said above, of granules of different kind and it is therefore necessary with the chemical filters at present to empty the containers of granules. This emptying is of course troublesome since the granules create dust and the containers in which they are stored are heavy and are also mounted at different levels in the air filters. An exchange of the granules is therefore very labour-intensive and requires protection equipment due to the dust.

### THE SOLUTION:

There has therefore long been a very strong need to be able to exchange these chemical filters in a suitable environmentally friendly way. According to the invention a filter element for filtering of gases such as air has been brought about which filter element includes an outer box-shaped casing and is characterized in that the casing consists of a light, combustible material such as cardboard and having two wholly or partly open opposing sides in which casing one or more box-shaped and closed containers (3) of combustible material such as plastics containing active sorbant pellets are arranged which containers (3) correspond with their longer sides to the longer side of the outer box-shaped casing (2), the container walls being perforated for percolation of the gases, for example air.

In accordance with the invention, it is suitable that in section the containers are arranged in a V-form and that the gases are intended to flow into the V and go out through the containers.

According to the invention the pellets in the filter element may consist of aluminium oxide impregnated with potassium permanganate.

### FIGURE DESCRIPTION:

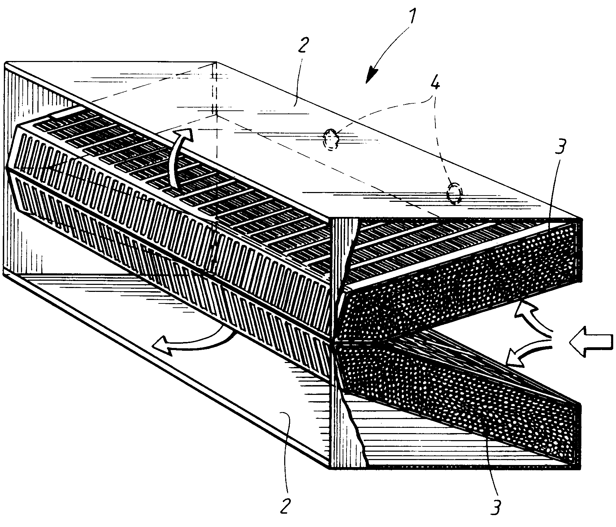

The invention will be described more in detail below in connection with the attached drawing which shows a section through a filter element according to the invention.

### PREFERRED EMBODIMENT:

In the drawing, a filter element is shown which is generally designated 1. The element 1 is box shaped and has four long sides 2 and two short sides. The filter element 1 comprises a light outer casing of combustible material, preferably cardboard. Along its short sides and along the top and bottom of the long sides 2 according to the drawing, the casing is sealed. Along the vertical long sides of the drawing, the casing is open or partly open so that air can flow through the casing.

Two containers 3 are arranged for the active sorbant pellet material. These containers are perforated so that air can flow through them and through the pellet material. The containers 3 are arranged in a V-form and the air is preferably arranged to flow in between the legs of the V-form as the unfilled arrows show. The containers 3 which are filled with pellet material, are kept in place suitably by means of strips at the end sides of the casing and are connected to each other via adhesive straps. The containers 3 are provided with closable openings 4 to make it possible to remove a sample of the pellets material for analysis. The containers 3 suitably consist of polyethylene which is combustible and environmental friendly. The material in these containers 3 can of course be of some other kind but should, however, be light and combustible in an environmentally-friendly manner.

Exchanging the filter element 1 is carried out in the simplest possible way. The casing 1, which is very light and which can be handled by only one man, is simply removed from the filter cabinet and a new container is inserted. No emptying of the pellets has to take place and the complete container can be put into an oven or the like for complete combustion thereof. All fumes will be environmental friendly and the aluminium oxide will become a part of the ash. It has thus been possible to replace a very heavy and dirty task with an utterly simple exchanging method.

The filter element according to the invention may have different constructions and it need not comprise two pellet containers since only one can sometimes be sufficient or, if desired, even more. It is neither necessary that the shape of the casing is the one shown in the drawing, and the filter element according to the invention can also have some other shape and may be adapted to different filter cabinets.

The invention is not limited to the embodiment shown by way of example and can be varied in different ways within the scope of the claims.

## Claims

1. Filter element for filtering of gases such as air including an outer box-shaped casing,
**characterized** in that the casing consists of a light, combustible material such as cardboard and having two wholly or partly open opposing sides in which casing one or more box-shaped and closed containers (3) of combustible material such as plastics containing active sorbant pellets are arranged, which containers (3) correspond with their longer sides to the longer side of the outer box-shaped casing (2), the container walls being perforated for percolation of the gases, for example air.

2. Filter element according to claim 1,
**characterized** in that the containers (3) in section are arranged in a V-form and that the gases are intended to flow into the V and out through the containers (3).

3. Filter element according to any of the claims 1 or 2, **characterized** in that the pellets consist of aluminium oxide impregnated with potassium permanganate.

## Patentansprüche

1. Filterelement zum Filtern von Gasen, wie beispielsweise Luft, mit einem kastenförmigen Außengehäuse,
dadurch gekennzeichnet,
daß das Gehäuse aus einem leichten, brennbaren Material, wie beispielsweise Pappe, besteht und zwei vollständig oder teilweise offene gegenüberliegende Selten besitzt, wobei in dem Gehäuse ein oder mehrere kastenförmige und geschlossene Behälter (3) aus einem brennbaren Material, wie beispielsweise Kunststoff, welches aktive adsorbierende Pellets enthält, angeordnet sind, wobei die längeren Seiten der Behälter (3) der längeren Seite des kastenförmigen Außengehäuses (2) entsprechen, und wobei die Behälterwandungen für das Filtern der Gase, beispielsweise Luft, perforiert sind.

2. Filterelement nach Anspruch 1, dadurch gekennzeichnet,
daß die Behälter (3) im Schnitt gesehen in einer V-Form angeordnet sind, und daß für die Gase ein Einströmen in das V und ein Herausströmen durch die Behälter (3) vorgesehen ist.

3. Filterelement nach Anspruch 1 oder 2,
dadurch gekennzeichnet,
daß die Pellets aus einem Aluminiumoxid bestehen, das mit Kaliumpermenganat imprägniert ist.

## Revendications

1. Elément de filtre destiné à filtrer des gaz tels que l'air, comportant un carter en forme de caisson,
caractérisé en ce que le carter est constitué d'un matériau léger et combustible, tel que le carton, possédant deux côtés opposés entièrement ou partiellement ouverts, et dans lequel sont disposés un ou plusieurs récipients fermés (3) en forme de caisson d'un matériau combustible, tel que de la matière plastique, contenant des granulés d'une matière active de sorption, les récipients (3) ayant leurs grands côtés qui correspondent au grand côté du carter externe en forme de caisson (2), les parois du récipient étant perforées afin qu'elles permettent la percolation des gaz, par exemple de l'air.

2. Elément de filtre selon la revendication 1, caractérisé en ce que les récipients (3) sont disposés avec une forme en V en coupe, et les gaz sont destinés à circuler dans la forme en V et à sortir à travers les récipients (3).

3. Elément de filtre selon l'une quelconque des revendications 1 et 2, caractérisé en ce que les granulés sont constitués d'oxyde d'aluminium imprégné de permanganate de potassium.
